Europäisches Patentamt

European Patent Office

Office européen des brevets

(11) Publication number: 0 513 433 A2

# EUROPEAN PATENT APPLICATION

(21) Application number: 91116096.8

(22) Date of filing: 21.09.91

(51) Int. Cl.5: G06F 9/44

(30) Priority: 14.05.91 US 700791

(43) Date of publication of application:
19.11.92 Bulletin 92/47

(84) Designated Contracting States:
AT BE CH DE DK ES FR GB GR IT LI LU NL SE

(71) Applicant: COMDISCO SYSTEMS, INC.
919 East Hillsdale Boulevard
Foster City, California 94404(US)

(72) Inventor: Powell, Douglas B.
1276 6th Avenue
San Francisco, California 94122(US)

(74) Representative: UEXKÜLL & STOLBERG
Patentanwälte
Beselerstrasse 4
W-2000 Hamburg 52(DE)

(54) An apparatus and method for generating efficiently executable code representative of a block diagram.

(57) Each block of a block diagram corresponds to a software procedure for performing at least one function and the block comprises at least one input and at least one output. The blocks have interconnections between the inputs and outputs for forming the block diagram. The executable code is assembled by ordering the procedures in accordance with penalties associated with each procedure, so that the procedures having the smallest penalties are executed prior to the procedures having larger penalties.

FIG. 1

BLOCK DIAGRAM

```
┌─────────┐           ┌─────────┐
│ Block A │- - - - - →│ Block B │
└─────────┘           └─────────┘
```

GENERATED CODE

```
1    ; Code for Block A
2    ADD XO, A        ;  A to the output that drives Block B
3    MOVE A, X:123    ;  save Output
4    ; Code for Block B
5    MOVE X:123,A     ;  Get out input from previous block
6    ASL A
7    MOVE A,X:126     ;  Save output
```

## Background of Invention

### A. Field of the Invention

This invention relates to an apparatus and/or method for generating and executing a software computer program representative of a block diagram having none, one or more feedback loops, and more specifically to an apparatus and/or method for the automatic generation of highly efficient, optimized source code which is representative of a block diagram and is executable on any compatible platform.

### B. The Prior Art

There are several products which generate source code from block diagrams. However, these code generators often fail to produce efficient source code.

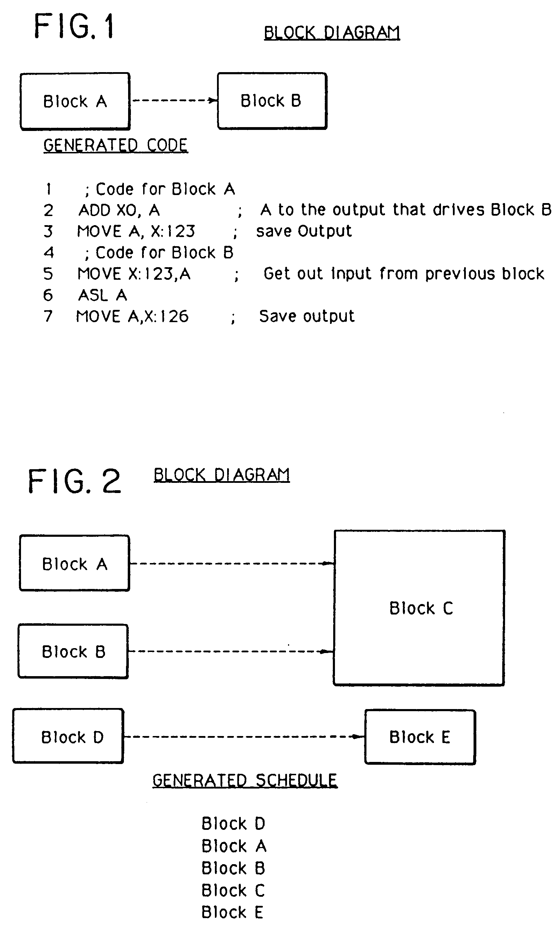

Each block in a block diagram corresponds to a software procedure; each block has one or more inputs, which are procedure's operands, and/or one or more outputs, which are the results of the procedure. Interconnections between blocks in the diagram correspond to the flow of data: data values computed by one block may thus be read as input by one or more other blocks. For example, referring to the simple block diagram in Fig. 1, the procedure associated with Block B reads as input the data value output by the procedure associated with Block A. Generated source code is most efficient when the data computed by a block's procedure is stored in fast registers, as opposed to memory, and is read directly from those registers by subsequent blocks which read that data. That is because the architecture of the typical target machine allows computational instructions to read data from, and write results to, a limited number of fast registers, all within a single instruction cycle. Retrieving data from main memory, on the other hand, requires an additional cycle during which data is sent over a bus line; likewise, storing data results to main memory consumes an extra cycle.

The Gabriel code generator (developed at U.C. Berkley) generates Motorola 56001 assembly language from block diagrams, but the generated source code contains unnecessary and excessive data move statements. Each block's procedure saves its output data to memory, and the blocks that need that data then retrieve the data from memory. Fig. 1 contains an illustrative example of inefficient source code generated by Gabriel. Note that the MOVE instructions on lines numbered 3 and 6 are unnecessary, as the data flowing between Blocks A & B could have simply been kept in Register A.

The Comdisco CGS code generator (generates C source code) illustrates the problems that arise when a code generator fails to schedule blocks which utilize particular data shortly after that data has been produced by previous blocks. The scheduler for CGS often interposes unrelated blocks in between blocks producing immediately usable data and blocks which use that data. For example, Fig. 2 illustrates a typical block diagram and the schedule that might be produced for it by CGS. Referring to Fig. 2, the CGS schedule is correct, but not optimal: the data produced by Block D's procedure could be immediately used by Block E's procedure. Yet, in the CGS schedule, Block E's procedure is not run and the data produced by Block D's procedure is ignored until after the procedures for Blocks A, B and C are run. If the procedures for Blocks A, B, & C use all of the target machine's available registers, this schedule could require the generated code to store Block D's output in memory and retrieve it later for use by Block E, instead of handling the flow from Block D to E directly in fast registers.

## SUMMARY OF INVENTION

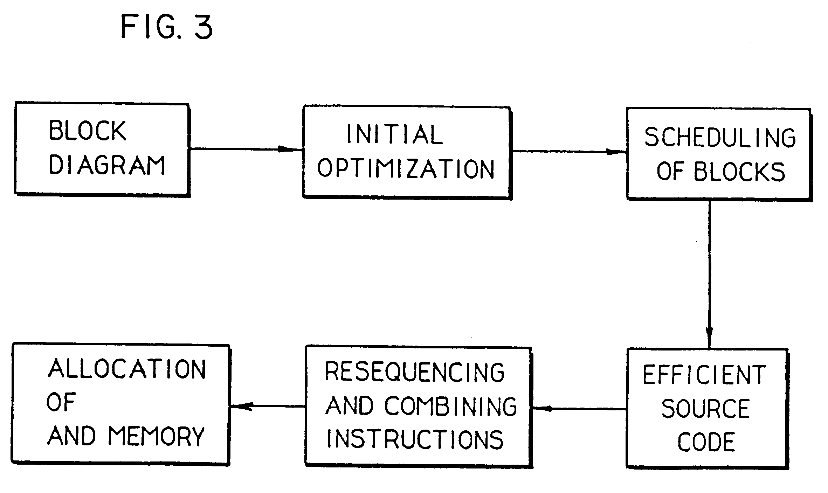

The code generation method and apparatus disclosed herein generates highly efficient source code from block diagrams. A flowchart giving an overview of the steps followed by the disclosed code generator is provided in Fig. 3 and is now briefly discussed. The given block diagram is initially optimized through selected block substitutions, using "strength reduction" techniques as are well known in the art of source code optimization. Next, the order in which the procedures of blocks will be executed is heuristically determined by the scheduler, taking into account the flow of data among blocks and the goal that data be read soon after it is produced so that the data may be kept in fast registers. Next, registers and memory are allocated and specified for the assembly language instructions associated with each block. This allocation is performed using model techniques, designed to create maximum opportunities for taking advantage of parallel memory capabilities supported by the target microprocessor. Finally, the source code generated in this way is analyzed, and instructions are re-sequenced and combined so as to fully employ parallel memory accesses where possible.

In a related embodiment of the invention, the user may request that the the code generator iteratively generate different variations of source code, by trying different model weights for scheduling or by trying different register and memory allocations. The code generator then keeps track of the generated source code version with the shortest number of cycles. The user may limit this iterative search by, for example, furnishing the code generator with a target number of cycles for the generated source code, or by specifying a fixed number of iterations to try.

Briefly the preferred embodiment of the invention includes a method and apparatus for generating efficiently executable code representative of each of multiple blocks of a block diagram. Each of the blocks of the block diagram corresponds to a software procedure for performing at least one function and each block comprises at least one input and at least one output. The blocks have interconnections between the inputs and the outputs for forming the block diagram. The method of the preferred embodiment comprises the following steps. First, generating a feed through list for each output of the blocks. The feed through list comprises a list of any of the inputs which directly affect the output of the block. Second, evaluating the feed through list associated with each block to determine whether the software procedure associated with the block can be executed. Third, for each of the procedures which can be executed, assigning a penalty for the procedure. The penalty takes into account any inefficiency of execution associated with the procedure due to data flow requirements among the procedures associated with the block diagram. Lastly, assembling the executable code by ordering the procedures in accordance with the penalties associated with the procedures so that the procedures having the smallest penalties are executed prior to the procedures having larger penalties. The preferred embodiment also contemplates that the step for signing a penalty for each procedure further includes the step for providing a model for predicting the effect of each condition associated with the procedure which causes inefficient execution of the procedure to occur. A score is associated with each prediction of each of the models and this score is for the models associated with the procedure are some for determining the penalty associated with the procedure.

## BRIEF DESCRIPTION OF THE DRAWINGS

Figure 1 contains a sample block diagram and source code generated for it by the Gabriel code generator;

Figure 2 is a sample block diagram and a block schedule that might be produced for it by the Comdisco CGS code generator;

Figure 3 is a schematic flow chart giving an overview of the steps followed by the disclosed code generator;

Figure 4 is a sample input description that a user might provide for typical 2 input ADDER block;

Figure 5 is a schematic block diagram representative of a simple notch filter;

Figure 6 is an optimized version of the schematic block diagram presented in Figure 5;

Figure 7 is a table showing the block substitutions which derive the block diagram in Figure 6 from the block diagram in Figure 5;

Figure 8 is a schematic block diagram used to illustrate data dependency;

Figure 9 is a schematic flow chart representing the steps involved in the method for block scheduling;

Figure 10 is a schematic flow chart representing the steps involved and the method for selecting the next block to be scheduled;

Figure 11 is a schematic block diagram used in illustrating the probability model;

Figure 12 is a schematic block diagram used in illustrating the data consumption model;

Figure 13 is a schematic block diagram used in illustrating the data lifetime model;

Figure 14 is a schematic block diagram used in illustrating the available data model;

Figure 15 is a schematic block diagram used in illustrating the future data consumption model;

Figure 16 is a schematic block diagram used in illustrating the clobber model;

Figure 17 is a schematic block diagram used in illustrating the machine state model;

Figure 18 depicts an initial code stream, a trace of the instruction resequencing method, and the resulting optimized code stream;

Figure 19 depicts a symbolic code stream, the code stream resulting from a non-alternating allocation, and the resulting optimized code stream after instruction resequencing;

Figure 20 depicts the code stream resulting from an alternating allocation applied to the previous symbolic code stream, and the resulting optimized code stream after instruction of resequencing;

Figure 21 depicts a sample sequence of register allocations and freecalls, and a trace of how an associated date-based register list would be maintained;

Figure 22 depicts a symbolic code stream, a linear based allocation applied to that symbolic code stream, and the resulting code stream;

Figure 23 depicts a date-based allocation applied to the previous symbolic code stream, the resulting code stream, and the optimized code stream resulting after instruction resequencing.

## DETAILED DESCRIPTION OF INVENTION

## DEFINITIONS

The following definitions are useful in describing the invention's preferred embodiment:

Consistent with terminology in the parent application, a "feedthrough" input to a block is an input that directly affects that block's output.

Block A "drives" Block B if the output of Block A is connected to a feedthrough input to Block B, or if Block A drives another block whose output is connected to a feedthrough input to Block B.

Block B "depends on" or "is driven by" Block A if and only if Block A drives Block B.

Block A "directly drives" Block B if the output of Block A is connected to a feedthrough input to Block B.

The "update state" function of Block C with feedback is considered to be connected to Block C's "update output" function. The "update state" function of Block C with feedback drives nothing.

NOTE: Although the detailed description that follows does not discuss any examples involving feedback loops or delay, the disclosed invention is readily applicable to such examples provided that such state blocks are handled using the "separate functionality" method disclosed in the parent application.

Referring to Fig. 1 of the parent application, the present application augments the parent application by disclosing new methods and apparatus for implementing the tasks of sequence list generation (i.e., block scheduling) and code generation (items 20 and 22), so as to produce more efficient source code (item 14). Throughout the present application, we refer collectively to the processes of block scheduling and code generation as code generation.

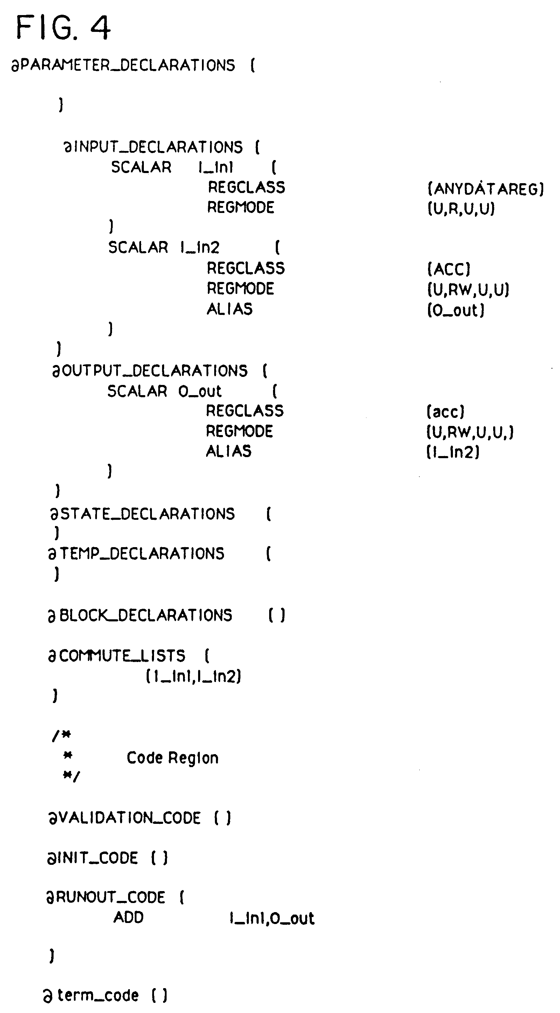

User-provided input for the disclosed code generator includes a block diagram and associated assembly language instructions (or instructions in a higher level language such as C which can be automatically compiled into assembly language) for the execution of each block; except that in the preferred embodiment, the code generator heuristically determines what registers and memory to use in each instruction, and so the user-provided instructions for each block refer not to specific machine resources (i.e., registers and memory) but instead to symbolic names for inputs and outputs of the block. In the preferred embodiment, the user may also control resource allocation by providing for each block a restricted list of registers or memory to choose from. Fig. 4 shows a sample description that a user might provide for a 2-input adder block. The description format conforms to the protocol of a particular code generation system that has been implemented; those skilled in the art will recognize that the details of format may be liberally modified to meet the protocol of any other implementation. The fundamental items in the sample description are the definition of symbolic labels for each block input and output (12, 14, 16); the specification of sets of allowable registers for each input and output and the specification in this example that the output be allocated the same register as one of the inputs (18); and the assembly language instruction provided for implementing the adder (20), written in terms of symbolic labels for operands and results. It is anticipated that particular implementations of the preferred embodiment will provide libraries containing prepared descriptions of commonly-used blocks which users may select. Such library implementations are common and well-known to those skilled in the art.

## A. Strength Reduction Optimization

A strength reduction optimization (also known as a reduction-in-strength optimization) replaces one or more expensive operations with one or more cheaper operations. Strength reduction optimizations are a common feature of most optimizing compilers. For a further description of strength-reduction in the compiler context, see Compilers: Principles, Techniques, and Tools, Alfred Aho, Ravi Sothi, and Jeffrey D. Ullman, Addison-Wesley, 1986, p. 557. In the preferred embodiment disclosed herein, reduction in strength optimization occurs at the block diagram level.

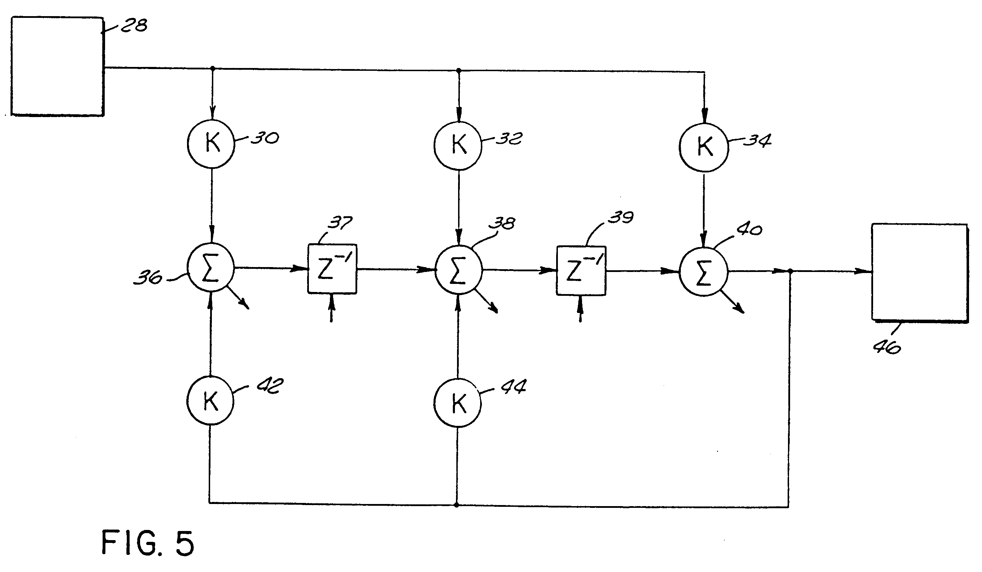

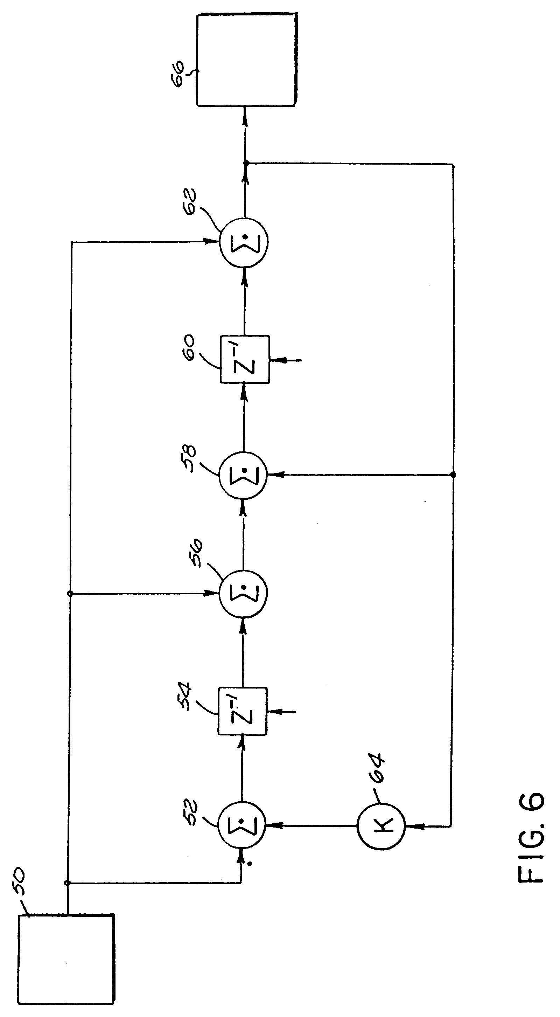

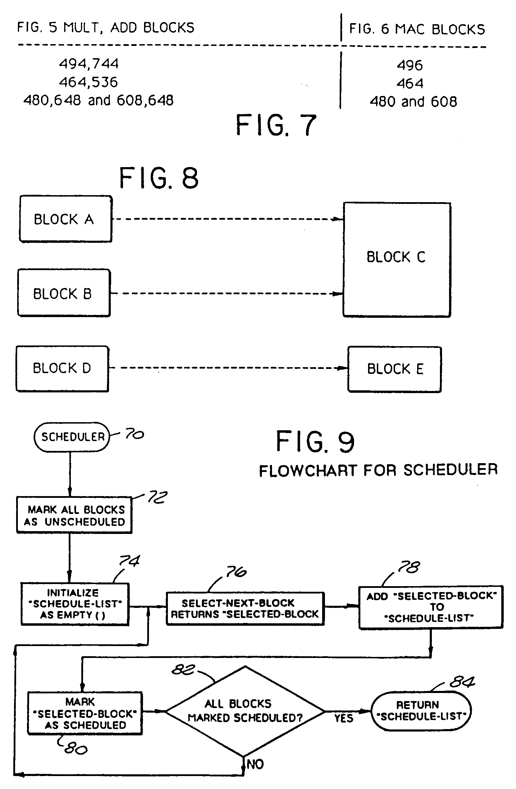

Refer to Fig. 5 & 6 for the illustration of the following example. The blocks marked "K" in Fig. 5 (30, 32, 34, and 44) perform MULT (multiplication) instructions on their input and an internal coefficient. The blocks marked with a capital sigma perform ADD instructions on their inputs. The blocks in Fig. 6 marked with a "sigma dot" (52, 56, 58, 62) are MAC blocks and perform a multiply and an add in one instruction. The code generator reduces a pair of MULT and ADD blocks in a certain connectivity into a single MAC block. Fig. 5 depicts a user-supplied, block diagram implementation of a notch filter, and Fig. 6 shows the functionally equivalent diagram resulting from several substitutions of MAC blocks for MULT-ADD combinations. Each such substitution saves one instruction cycle. The specific substitutions in this example are depicted in Fig. 7.

## B. The Heuristic Scheduler

### a. Goals and Basic Operation

The scheduler uses a set of tunable models to generate code schedules. The models are designed to help the scheduler generate efficient schedules which minimize and optimize data movement, unlike the prior art code generators described earlier, by taking into account the flow of data among blocks and the goal that data be read soon after it is produced so that the data may be kept in fast registers. The various models serve to model the data flow among blocks in a concrete way that can be taken into account as block scheduling decisions are made.

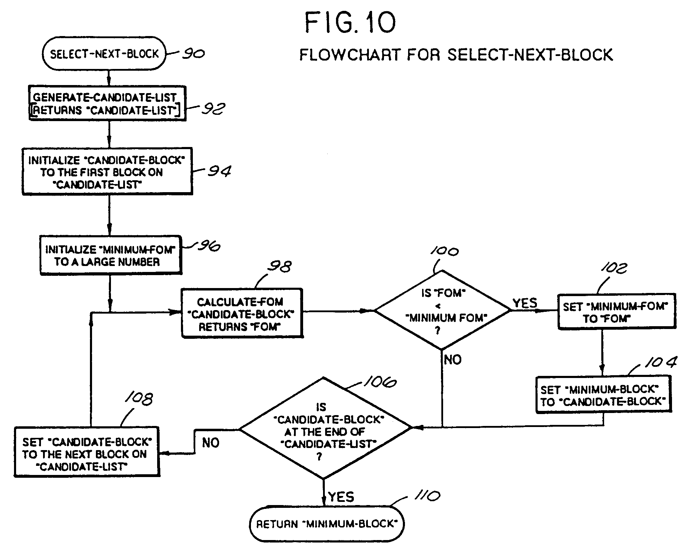

Referring now to Fig. 9, the scheduler iteratively determines the order that blocks will be run (84), selecting one block on each iteration as the next to be run (76). Referring to Fig. 10, at the start of each iteration, the scheduler computes the current list of blocks that could potentially be scheduled next (92): i.e., all unscheduled blocks with no feedthrough inputs, or whose feedthrough inputs are all connected to outputs of blocks that have already been scheduled ("Candidate List"). Thus, in the example depicted in Fig. 8, Blocks A, B, and D can be put on the current Candidate List; however, Block E can be put on the Candidate List only after Block D has been scheduled, because its feedthrough input is directly connected to the output of Block D, and Block C can similarly be put on the Candidate List only after Blocks A and B have been scheduled.

During each iteration, a Figure-of-Merit ("FOM") penalty is then calculated (98) for each block on the current Candidate List, equal to the floating-point summation of all weighted models applied to that block. Each model is implemented by a function returning a floating-point number, representing a "score" for each block under consideration for being scheduled next. Furthermore, the models are tunable: each model has an associated weight which may be changed by the user, so as to generally increase, decrease, or eliminate the effect of that model on FOM's and hence on scheduling.

At the end of each iteration, the block with the lowest current FOM is selected to be scheduled next (110). Because several blocks may possibly share the lowest FOM, a tie-breaking procedure must be defined. Preferred embodiments of the invention include tie-breaking procedures which either arbitrarily pick one of the tied blocks or which calculate special tie-breaking FOM's based on a subset of the models or on a more detailed version of the models. In any event, the next iteration can then begin with the computing of a new Candidate List and corresponding FOM's, and so on.

b. Detailed Description of Scheduling Models

The following models are used in the DPC code generator. They are listed in order of decreasing importance.

1. Probability that a block's outputs will not be quickly usable

Calculating this probability model tells us whether it is likely that a block's output (or outputs) is not quickly usable. Producing outputs that aren't quickly usable may ultimately yield inefficient code containing excessive register and memory moves.

The probability score for any candidate block is calculated as the summation of the number of still-unscheduled blocks (besides the candidate itself) that each block directly driven by the candidate block depends on. In the preferred embodiment, the probability is adjusted by being divided by the number of blocks directly driven by the candidate block, although this adjustment is not absolutely necessary.

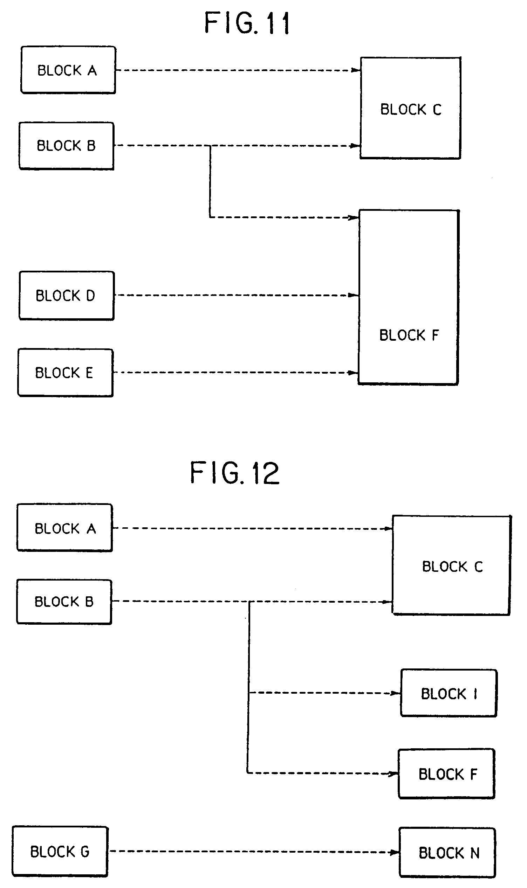

Refer to the block diagram of Fig. 11, and assume that the current Candidate List contains Blocks A, B, D, & E. Assume also a weight of 1.0 for this model (i.e., the weight does not alter the raw score for each block).

Since Block A drives only Block C, which is in turn driven by only one unscheduled block besides Block A itself (namely, Block B), the score for Block A is computed as $1/1 = 1.0$.

Block B drives Blocks C and F; Block C is again driven by one other unscheduled block, and Block F is driven by two other unscheduled blocks. So, Block B's score equals $(1+2)/2 = 1.5$.

Block D drives only Block F, and Block F is driven by two other unscheduled blocks, so the score for Block D equals $2/1 = 2.0$.

Finally, Block E also drives only Block F, and so again its score equals 2.0.

Thus, taken by itself, this model suggests that the block least likely to generate an output that is not quickly usable is Block A. This factor would thus weigh in favor of scheduling Block A next.

2. ALU (register) resources

The ALU resource model is used to avoid scheduling a block for which there aren't enough available registers.

To implement this model, in the preferred embodiment the scheduler must incorporate a list of the target microprocessor's available registers, and throughout its iterations must maintain current lists of free registers and of used registers. Each block must also be permanently associated with a list of the register resources it needs in order to run. Programming means for the implementation of these bookkeeping requirements will be apparent to those skilled in the art. The ALU resource model compares the current list of free registers to the list of registers required by each candidate block; the number of registers required by the block which are not currently on the free list is that block's model score. If there are no such unmet requirements then the score is 0. Registers required by the block which are not currently free but which happen to already contain data required by the candidate block are not added to the block's score, since that data does not require the allocation of any extra registers.

Assume that Blocks A & B are on the current Candidate List; that the currently free machine registers are: x0, x1, and y1; and that the registers currently in use are: y0, a, and b. Assume also that Block A has one input, whose data format requires the use of register x0, and one output, requiring the use of register a; while Block B has one input, whose data format requires the use of registers x1 or y1, and one output which may be stored in register x0. The model would note that Block A's output requires the use of an unavailable register (thus necessitating a memory access), and Block A's unweighted score would be 1.0. Block B can be run using currently free registers only (e.g., x1 & x0), and so would earn a score of 0.0.

Note that the scheduling of Block B before Block A in this example may provide a solution to the problem of Block A's register requirements. The scheduling of Block B may yield an expanded Candidate List for the next iteration, which may result in the scheduling of all blocks which use ("consume") the data presently in register a. Register a may thus be freed for use by Block A without any extra memory access.

## 3. Data Consumption

This model favors the scheduling of blocks that will "consume" the most available data (i.e., use the data, preferably where no other unscheduled blocks are driven by that data). Since data is left in registers whenever possible, it is desirable to consume data as quickly as possible so that registers can be freed up and recycled, making it easier for other blocks to be subsequently run without data deadlocks or register conflicts necessitating memory access.

The data consumption model score for a candidate block is calculated as the negative of the summation, over all inputs of the block, of the reciprocal of the number of still-unscheduled blocks (counting the candidate block) that are directly driven by each direct driver of the candidate block. Thus, if a candidate block has no inputs, it gets a score of 0.0; if it completely consumes all of its inputs, its earns a low score equal to the negative of the total number of its inputs; if the block partly consumes its inputs, it will receive a score somewhere in between. A strongly negative score indicates a high degree of data consumption.

Refer to the block diagram of Fig. 12, and assume that the current Candidate List contains Blocks C, F, & H, while Blocks A, B, D, E, G, & I have already been scheduled.

Block C's direct driver Block A drives only Block C; Block C's direct driver Block B also drives Block F (Block I doesn't count because it has already been scheduled); hence, the score for Block C equals the negative of 1/1 + 1/2, or -1.5.

Block F's direct driver Block B again is shared with one other unscheduled block; its direct drivers Blocks D & E drive nothing else; hence, the score for Block F equals the negative of 1/2 + 1/1 + 1/1, or -2.5.

Finally, Block H's direct driver Block G drives nothing else, and so the score for Block H equals -1.0.

Thus, taken by itself, this model suggests that the block which would "consume" the most input data would be Block F. This factor would thus weigh in favor of scheduling Block F next.

## 4. Data Production and Data Lifetime

The Data Production and Data Lifetime model causes the scheduling of blocks that will produce data that is likely to be most rapidly consumed, and discourages the scheduling of blocks until their data is absolutely needed. The model thus helps to reduce data deadlocks and conflicts in register needs.

The amount of data that a block produces is equal to the number of the block's connected outputs. The Lifetime of the data depends on the number of blocks that must be run before that data is completely used; i.e., all blocks directly driven by the data, and all blocks which drive those blocks. Since the Lifetime of that data depends on the block's position in the execution schedule, which cannot be known until after scheduling, the Lifetime is approximated by using the minimum possible Lifetime. Note that the Data Production and Lifetime model is similar to the Probability model. This model is simply the summation of minimum possible Lifetimes for each output of the candidate block.

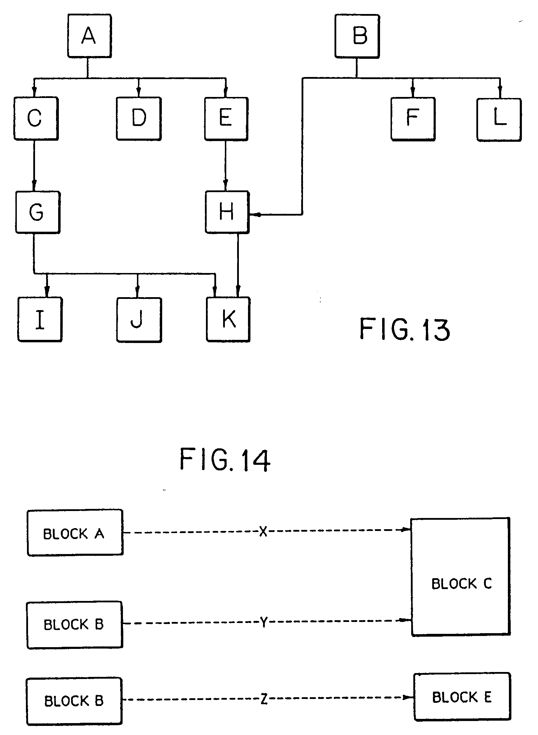

Refer to the block diagram of Fig. 13, and assume the following conditions:

- Blocks A, C, and D have already been scheduled;
- Blocks B, E and G are on the Candidate List;
- Blocks H, I, J, K, F, and L have not been scheduled and are not current candidates;

The model calculations follow:

Number of outputs from Block B = 2; total minimum Lifetime = 4 (run blocks E, H, F and L).

Number of outputs from Block E = 1; total minimum Lifetime = 2 (run blocks B and H).

Number of outputs from Block G = 3; total minimum Lifetime = 6 (run blocks I,J,B,E,H,K).

Thus, this model supports scheduling Block E first.

## 5. Penalty for Ignoring Available Data

The Penalty model causes the code generator to use available data before producing more data. This model helps the code generator maintain register throughput and avoid register need conflicts.

The scheduler maintains a list of available data, cross referenced to the register in which the data resides. These bookkeeping requirements may be implemented by programming means apparent to those skilled in the art. The Penalty model measures the amount of available data that will be ignored by the block's procedure; it is thus calculated by subtracting the amount of available data a block uses from the size of the available data list.

Refer to block diagram of Fig. 14, and assume the following conditions:
- Blocks A and B have been scheduled;
- Block D and Block C are on the Candidate List;
- Data X and Y are on the available data list.

The Penalty model is calculated as follows: Block C ignores no available data so its Penalty is 0.0; Block D ignores both available items of data, so its Penalty is 2.0.

Using this figure the code generator would choose to schedule Block C first. It would then delete Block C from the runnable list, and delete both X and Y from the available data list.

## 6. Future Data Consumption

The Future Data Consumption model encourages the scheduling of blocks which directly drive blocks that can consume available data. This model is essentially a one-step lookahead version of the Data Consumption model and is thus useful as a tie breaking model.

The reasons for this model are the same as those of the Data Consumption model.

The Future Data Consumption model basically represents the negative of the amount of available data consumed by blocks directly driven by the candidate block.

The future data consumed may be calculated either as a function of the available data consumable by each directly driven block, or it may be a simple count of the number of available data consuming blocks that running this block will cause to be added to the runnable List.

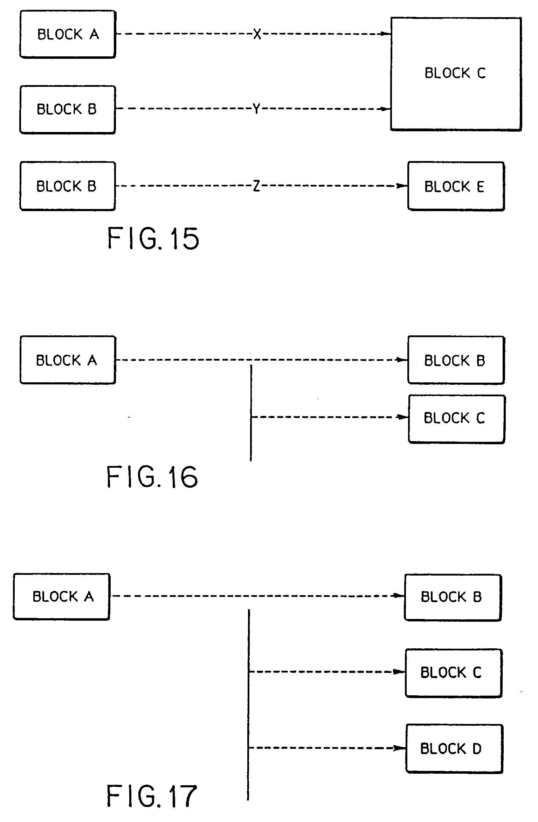

Refer to the block diagram of Fig. 15, and assume the following conditions:
- Block A has been scheduled;
- Blocks D and B are on the Candidate List;
- We are using the first method (described above) to calculate the future data consumed;
- Datum X is on the Available Data list.

The calculation of the Future Data Consumption model follows: Block B directly drives only Block C; if Block B is scheduled, data X and Y will both be available, and Block C will be able to consume both. So, Block B's score is -2.0. Block D directly drives only Block E; if Block D is scheduled, data X and Z will be available, and Block E will be able to consume only Z. So, Block D's score is -1.0.

This model supports the scheduling of Block B before Block D.

## 7. Clobbering Drivers

The Clobber model tries to delay the scheduling of blocks whose procedure's implementation calls for writing output to the same register in which one of its inputs is stored, until after any other blocks which also read that input but don't overwrite it have been scheduled. The Clobber model thus helps the scheduler avoid unnecessary data movement to and from memory or registers.

The Clobber model favors blocks that don't overwrite their inputs. Since this model is only important when the overwritten input is shared on a net connection, this model is non-operative for blocks that are not on nets (i.e., blocks who do not share common inputs with other blocks). For candidate blocks that are on a net, the model assigns one point for each input to the candidate that is shared by other blocks and that the candidate block will overwrite.

Refer to the block diagram in Fig. 16, and assume the following conditions:
- Block A has been scheduled;
- Blocks B and C are on the Candidate List;
- Block B overwrites (clobbers) its input;
- Block C reads from (does not clobber) its input.

The Clobber Heuristic is calculated as follows: Block B's input (from Block A) is on a net connection; Block B will overwrite its input, and that input is needed by another unscheduled block (Block C); hence, Block B's Clobber score is 1.0.

Block C's input is on a net connection, but Block C will not overwrite its input. Hence, Block C's Clobber score is 0.0.

This model supports scheduling Block C before Block B. Note that if the scheduler put Block B before Block C, it would have to save Block A's output data before running Block B, or else Block C would not have access to its driver data. Note also that if Block C were not on a net connection, the model would not have mattered as the code generator would not have had to schedule an intervening statement to save Block A's output.

## 8. State of the Machine

The Machine State model allows the scheduler to make use of the state of the machine in making scheduling choices. This machine state information might include such information as: 1) the state of certain control registers, and/or 2) the best instruction to schedule next for maximum use of the target architecture's parallel instruction capability.

This model helps the scheduler generate more efficient schedules avoiding expensive machine state changes and taking advantage of parallel operations.

The code generator maintains a data structure describing the state of the target architecture. Each block has associated with it, either implicitly or explicitly, a description of how it will affect the target architecture's state (the exit state). Each block also contains a description of what the target architecture's state should be on entry to the block (the entry state).

The Machine State model compares the block's desired entry state to the current architecture state. The greater the difference between the block's desired entry state and the current Machine State, the larger the model score (i.e., the less likely the block will be scheduled next).

Assume that the target architecture may be in either state 1, 2, 3 or 4 and that the scheduler tracks the target architecture state. Each block has a desired entry state and an exit state. Further assume that the greater the difference between two states the higher the cost of changing states. Refer to the block diagram in Fig. 17, and assume the following conditions:

- Block A has been run;
- Blocks B, C and D are on the Candidate List;
- The target architecture is in state 1;
- Block B has desired entry state 2 and exit state 3;
- Block C has desired entry state 3 and exit state 4;
- Block D has desired entry state 4 and exit state 4;

The Machine State model would be calculated as follows: for Block B, the desired entry state (2) differs from the current architecture state (1); so, Block B's score would be 1.0. Block C's desired entry state (3) differs from the current architecture state (a) by 2, which would be Block C's score. Block D's desired entry state (4) differs from the current architecture state (a) by 3, which would be Block D's score.

Based on this model, the scheduler would schedule Block B next. Suppose Block B is chosen; for the next iteration, assume the following updated conditions:

- Blocks A and B have been run;
- Blocks C and D are on the Candidate List;
- The target architecture is in state 3.

This time, Block C's desired entry state (3) equals the current architecture state, so Block C's score is 0.0. Block D's desired entry state (4) differs from the current architecture state (3) by 1, which would be Block D's score.

Based on this model the scheduler would pick Block C next, followed lastly by Block D. Note that any other scheduling would have resulted in unnecessary state changes as blocks were run.

## C. Register Allocation and Instruction Resequencing

The processors for which the disclosed invention will generate code will often have more than one memory that can be accessed simultaneously, with constraints on the syntax and semantics of the accesses. For instance, the Motorola 56001 processor has an X and a Y memory and associated X and Y register banks. On the Motorola 56000 chip it is generally possible to perform an operation, an access to X memory and/or an access to Y memory at the same time. The following allocation methods and the techniques for resequencing and combination attempt to make efficient use of those parallel register banks and memory spaces. For illustrative purposes, the following descriptions refer to X and Y memory and register banks, although the described procedures are generalizable to other processors as well, as apparent to those skilled in the art.

## 1. Instruction Resequencing and Combination

Generated assembly language instructions may be resequenced and combined so as to take full advantage of the target processor's parallel execution capabilities. For instance, many operations of the Motorolla 560001 can be performed concurrently with a move to or from one or more memories. The target processor's MOVE statement is also capable of performing two data moves at the same time. These concurrent (parallel) operations are cheaper or more efficient than the same operations performed in serial.

The resequencing and combining method looks through the code stream for "orphans", or MOVE statements not executed in parallel with other operations. When it finds an orphan it looks backwards in the code stream for operations or MOVE statements that may legally be combined with the orphan. The statements that are candidates for combination are known as parallel candidates. Whenever the method finds a valid parallel candidate it puts it onto a stack. It continues looking backwards for parallel candidates until it reaches the beginning of the code stream or until it encounters an instruction which either writes to or reads from the orphan MOVE's destination, or writes to the orphan MOVE's source, or a blocking instruction. A blocking instruction is an instruction that denotes the compiler boundary of a basic block, and may consist of flow of control statements, function calls, etc. When the backwards search for parallel candidates terminates the method pops the top parallel candidate off of the stack and combines the orphan with it, deleting the orphan from its original position in the code stream. If there are no parallel candidates on the stack the orphan cannot be moved. After recombination, the method clears the parallel candidate stack and moves on to the next orphan, and so on until the entire code stream has been examined.

This phase of the method re-schedules MOVE statements before their original position in the code stream. A second phase looks through the code stream and tries to reschedule and recombine remaining orphans by moving them either forward or backward in the code stream, subject to the same limits concerning reads or writes to the orphan's destination or source, and blocking instructions.

For illustration, we refer in the following example to a hypothetical machine (a simplified and altered version of the Motorola 56001 chip), containing Xregisters XO and X1, Yregisters Y0 and Y1, two additional registers A and B; and the MOVE syntax is "MOVE Xmove Ymove", where Xmove may only be of the form: from Xmemory to X register, Ymove may only be of the form: from Ymemory to Y register, and either Xmove or Ymove is optional. Also, the cost of any form of MOVE is the same. For example, statements of the form "MOVE Xmove", "MOVE Ymove", and "MOVE Xmove Ymove" all have the same cost. Also, the SHIFT instruction syntax is "SHIFT Operand1 Xmove Ymove", where Operand1 may be any of the registers, and Xmove and Ymove are both optional and follow the MOVE rules described above. However, the same register may not appear as both an operand of SHIFT and as a component of the SHIFT's Xmove or Ymove.

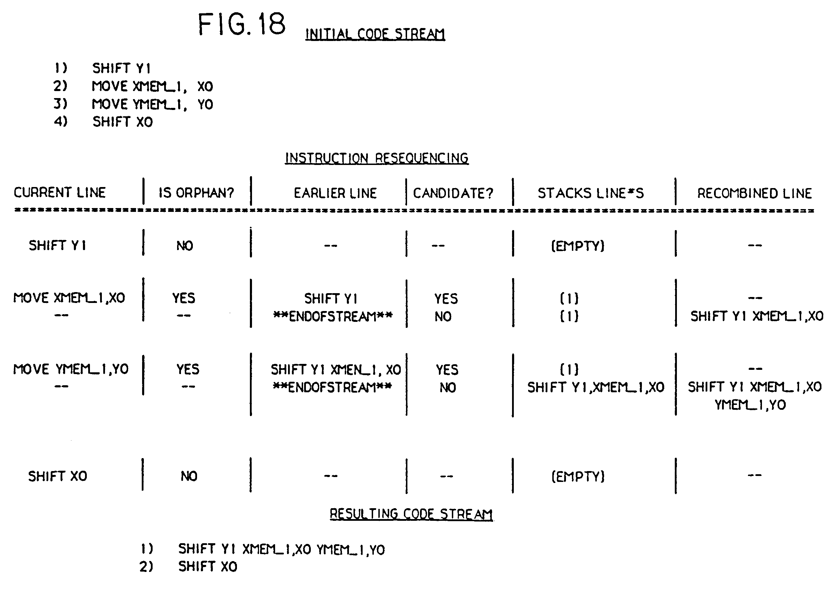

Fig. 18 illustrates the process of rescheduling and combining applied to an example code stream. The figure's chart traces how the initial MOVE instruction at line 2 is identified as a orphan, the SHIFT instruction at line 1 is stacked as a candidate for combination with the orphan, and the actual combination of the orphan with the stacked instruction. An identical process is then followed for the second MOVE instruction. As a result of two orphan MOVE's being combined with a single SHIFT instruction, the resulting code stream is one-half the size and twice as efficient as the original code stream.

In this example, the method was effective at optimizing the code because there were no precedence conflicts and the MOVES could all be legally resequenced and combined. If, however, the register used in the SHIFT instruction had itself been used again in the subsequent MOVE's, the method would have had little success. Making equal use of the machine's full complement of registers and MOVE types can thus enhance the opportunities for parallelism, and motivates the register allocation algorithms discussed in the next section.

## 2. Alternation Allocations between Register and Memory Banks to Increase Parallelization Possibilities

Alternating register allocations between X and Y register banks is a cheap and efficient method of allocation that generally helps the code generator make the fullest use of parallel instruction sets through resequencing and combining instructions (see above).

In order to alternate between X and Y registers and memory, the method must store whether the last register allocation was from an X register bank or a Y register bank, and likewise store from which memory bank the last memory allocation was performed. When the register allocator is performing an allocation for an object that can be allocated either an X register or a Y register, it attempts to alternate between register banks in successive allocations; likewise when allocating memory from X or Y memory banks. For those items of data which are stored both in memory space and in a register, the preferred embodiment of the allocation method puts objects that have been allocated an X register in X memory, and so on. For processors having more than two memories, the method would store information about when a particular bank was last accessed in a circular list, in order to evenly distribute the allocations throughout all the banks.

For illustration, we refer to a hypothetical machine (a simplified and altered version of the Motorola 56001 chip), containing Xregisters XO and X1, Yregisters Y0 and Y1, two additional registers A and B; and the MOVE syntax is "MOVE Xmove Ymove", where Xmove may only be of the form: from Xmemory to X register, Ymove may only be of the form: from Ymemory to Y register, and either Xmove or Ymove is optional. Also, the cost of any form of MOVE is the same. For example, statements of the form "MOVE Xmove", "MOVE Ymove", and "MOVE Xmove Ymove" all have the same cost. Also, the SHIFT instruction syntax is "SHIFT Operand1 Xmove Ymove", where Operand1 may be any of the registers, and Xmove and Ymove are both optional and follow the MOVE rules described above. However, the same register may not appear as both an operand of SHIFT and as a component of the SHIFT's Xmove or Ymove.

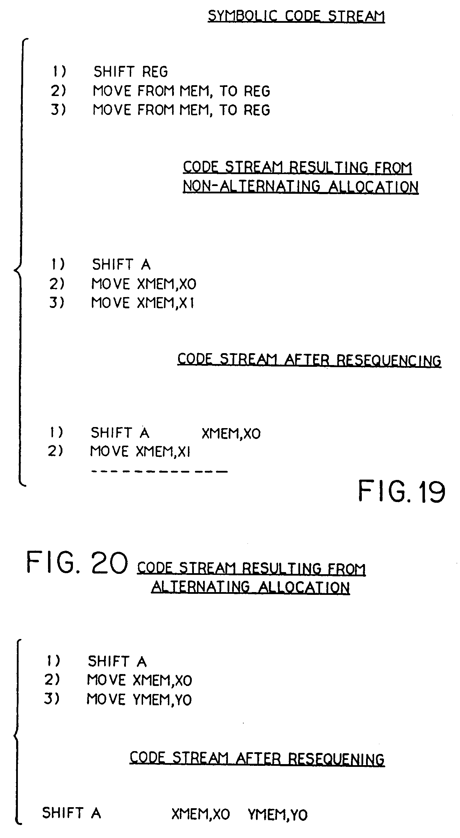

Fig. 19 presents a code fragment calling for a SHIFT of register data, and two MOVE's of data from X or Y memory into either X or Y registers. As shown in the figure, if the allocators don't allocate from both register/memory banks, the code generator cannot schedule the moves in parallel with the first shifter. Because the MOVE statements in lines 2 and 3 are both of the form "MOVE Xmove" the code rescheduler cannot make full use of the parallel MOVE construct. Thus the cost of the code stream can only be reduced by one cycle, by folding either but not both of the MOVE statements into the SHIFT line. However, assuming the same conditions and initial code stream as in the above example, register bank alternation would lead each of the two MOVE instructions to be allocated a different register/memory bank. As shown in Fig. 20, the rescheduler and combiner could then reschedule the MOVEs in line 2 and 3 so that they occur in parallel with line 1. The resulting code would be twice as fast as the code produced without using register bank alternation.

### 3. Using Date-Based Register Buffers for Increased Parallelization

Allocating registers from circular buffers is a cheap and efficient method of allocation that generally helps the code generator make the fullest use of parallel instruction sets through resequencing and combining instructions (see above).

For illustration, we refer again to our earlier hypothetical target machine, and discuss the allocation of X registers only. If the register allocation method stores its X registers in a linearly ordered linked list, and always allocates the next available register starting at the head of the list, repeated allocations of X registers would often yield sequences of instructions heavily dependent on the same X register. Repeated use of the same register would severely hamper the code generator's ability to reschedule instructions; see the earlier description of restrictions on instruction rescheduling.

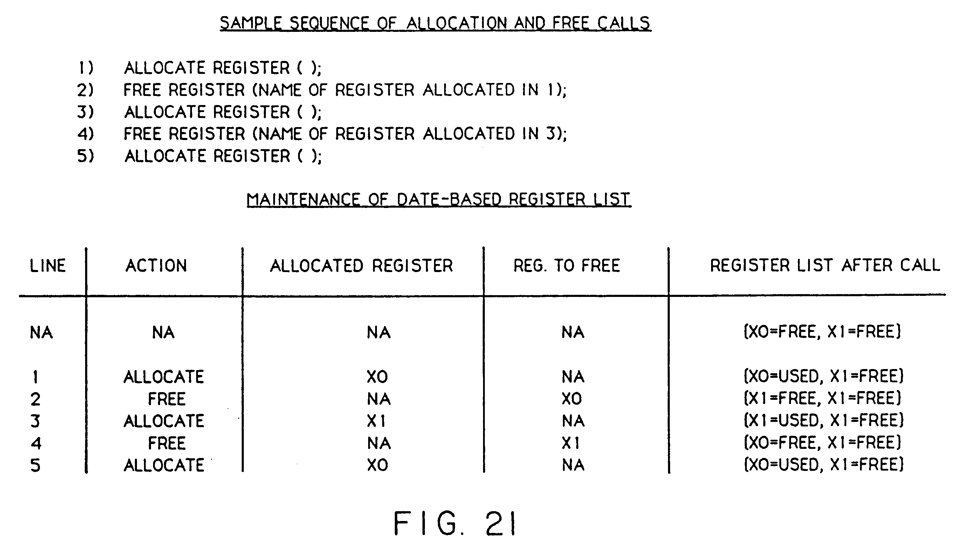

In order to surmount this problem, the disclosed register allocator instead keeps a date-based list of the registers in a circular list. Each list item contains a flag which says whether or not the corresponding register is currently free. The ordering of the circular list reflects the ordering of the last use of each register. In other words, the registers are ordered so that the register most recently freed is the last one on the list. Thus, the register freed longest ago will be the next one allocated. The register list gets re-ordered as allocation and freeing proceed. The example presented in Fig. 21 demonstrates how the data-based register list is maintained and reordered throughout a simple sequence of register allocation and freeing.

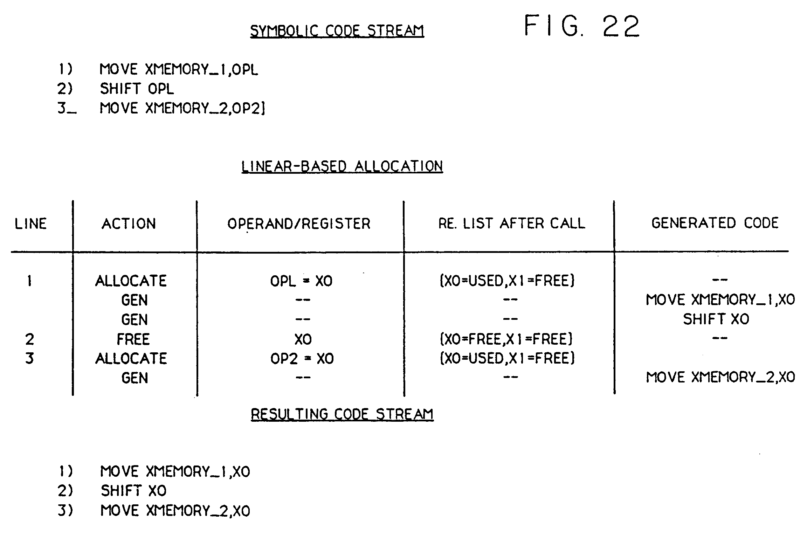

First, we demonstrate the inefficiencies of code generated using linear-based register allocation. Assume our previous hypothetical machine, with X and Y registers and memory banks. Assume further that register allocations to the symbolic variables op1 and op2 are to be performed, that op1 and op2 may only be allocated X registers, that op1 is initialized from memory location Xmemory__1, that op2 is initialized from memory location Xmemory__2, that the initial X register list contains X0 followed by X1 (both free), and finally that the Gen action generates a line of code when the operands for a line of code have been allocated. A symbolic representation of instructions performing these tasks is shown in Fig. 22. Note that the register allocated to op1 can be freed after the processing of op1 and made available for allocation to op2. A linear-based allocator would presumably allocate the same register for both operands. As shown in Fig. 22, the resulting code stream would cost 3 cycles and could not be reduced to a cheaper or more efficient representation.

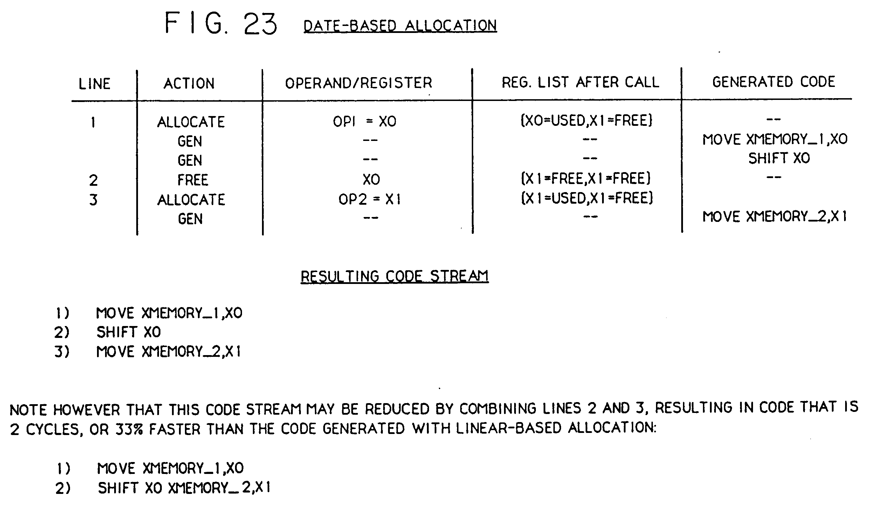

However, the date-based approach to register allocation avoids the inefficiencies of the linear approach. Assuming the same hypothetical machine and conditions, the date-based register allocator would allocate a different X-register for each operand, as shown in Fig. 23. The resulting code stream may be reduced by combining two instructions that use different registers, resulting finally in code that only takes 2 cycles, and is thus 33% faster than the code generated with linear-based allocation.

The invention has been described in an exemplary and preferred embodiment, but it is not limited thereto. Those skilled in the art will recognize that a number of additional modificiations and improvements can be made to the invention without departure from the essential spirit and scope. For example, a number of different software techniques and any number of different software languages would be suitable for implementing the disclosed invention.

### Claims

1. A method for generating efficiently executable code representative of each of multiple blocks of a block diagram, each said block of said block diagram corresponding to a software procedure for performing at least one function and each said block comprising at least one input and at least one output, such blocks having interconnections between such inputs and output for forming said block diagram, the method comprising the steps of:

    a. generating a feed- through list for each output of said blocks, said feed through list comprising a list of any of said inputs which directly affect the output of the same block;

b. evaluating the feed- through list associated with each block to determine whether said software procedure associated with said block can be executed;

c. for each of said procedure which can be executed, assigning a penalty for each procedure, said penalty taking into account any inefficiency of execution of said procedure due to data flow requirements among each of said procedures associated with said block diagram;

d. assembling said executable code by ordering said procedures in accordance with said penalties associated with said procedures so that said procedures having smaller penalties are executed prior to said procedures having larger penalties.

2. The method of claim 1 wherein said step for assigning a penalty for each procedure further includes the step of providing a model for predicting the affect of each condition associated with said procedure for causing inefficient execution of said procedure to occur.

3. The method of claim 2 wherein said step for providing a model for predicting the effect of each condition, further includes the step of providing an adjustable weight associated with each of said models so that the effect of each model can be increased, decreased or eliminated.

4. The method of claim 3 wherein said step of providing an adjustable weight further includes the step of using different weights associated with each model to obtain the most efficient sequence of procedure.

5. The method of claim 4 wherein said step for using different weights further includes the step of limiting the number of different weights to use with the associated models.

6. The method of claim 2 further including the step of associating a score with each prediction of each of said models and summing all of said scores for said models associated with said procedure for determining said penalty for said procedure.

7. The method of claim 2 wherein said stop of providing a model for predicting the effect of each condition associated with said procedure further includes the step of modeling the probability that said output of one of said procedures will not be quickly usable by a different one of said procedures.

8. The method of claim 2 wherein said step of providing a model for predicting the effect of each condition associated with said procedures further include the step of modeling the number of registers required by the procedure associated with said block which are currently unavailable.

9. The method of claim 2 wherein said step of providing a model for predicting the effect of each condition associated with said procedure further includes the step of modeling the rate at which said procedure uses data which are input into said block associated with said procedure.

10. The method of claim 2 wherein said step of providing a model for predicting the effect of each condition associated with said procedure further includes the step of modeling the rate at which said procedure generates data at said outputs of said block associated with said procedure.

11. The method of claim 8 wherein said step of providing a model for predicting the effect of each condition associated with said procedure further includes the step of modeling the duration of time necessary to process said generated data by a different one of said procedures.

12. The method of claim 2 wherein said step of providing a model for predicting the effect of each condition associated with said procedure further includes the step of modeling the amount of available data that will never be used by the procedure associated with said block.

13. The method of claim 2 wherein said step of providing a model for predicting the effect of each condition associated with said procedure further includes the step of modeling whether said procedure associated with said block drives other blocks of said diagram which readily use available data.

14. The method of claim 2 wherein said step of providing a model for predicting the effect of each condition associated with said procedure further includes the step of modeling the possibility that said procedure associated with said block will overwrite input data provided to said block with output data from said block.

15. The method of claim 2 wherein said step of providing a model for predicting the effect of each condition associated with said procedure further includes the step of modeling the state of the machine for executing said procedure so that the state of the machine shall dictate when said procedure is executed.

16. The method of claims 8 or 9 or 10 or 11 or 12 or 13 or 14 or 15 wherein said procedures are executed on a target processor and said procedures include assembly language instructions and said step further includes the step of resequencing said assembly language instructions to take advantage of any parallel execution capabilities of the processor used for executing said instructions.

17. The method of claims 8 or 9 or 10 or 11 or 12 or 13 or 14 or 15 wherein said procedures are executed on a target processor and said procedures include assembly language instructions and said step further includes the step of combining two or more of said instructions into one instruction in order to take advantage of parallel execution capabilities of the target processor used for executing said isntructions.

18. The method of claim 16 or 17 wherein said target processor includes a register memory having a first and a second register bank and said step further includes the step of alternating between said first and second register banks when storing data to said memory of said target processor.

19. The method of claims 16 or 17 or 18 wherein said target processor further includes a circular buffer and said step further includes the step of providing a date based list of said registers of said target processor in said circular list and each list item contains a flag which indicates whether or not the corresponding register is currently usable, the order of said circular list reflecting the order of the last use of each register.

20. An apparatus for generating efficiently executable code representative of each of multiple blocks of a block diagram, each said block of said block diagram corresponding to a software procedure for performing at least one function and each said block comprising at least one input and at least one output, such blocks having interconnections between such inputs and output for forming said block diagram, the apparatus comprising the steps of:

a. means for generating a feed- through list for each output of said blocks, said feed through list comprising a list of any of said inputs which directly affect the output of the same block;

b. means for evaluating the feed- through list associated with each block to determine whether said software procedure associated with said block can be executed;

c. means for assigning a penalty for each procedure, said penalty taking into account any inefficiency of execution of said procedure due to data flow requirements among each of said procedures associated with said block diagram;

d. means for assembling said executable code by ordering said procedures in accordance with said penalties associated with said procedures so that said procedures having smaller penalties are executed prior to said procedures having larger penalties.

21. The apparatus of claim 20 wherein said means for assigning a penalty for each procedure further includes means for providing a model for predicting the affect of each condition associated with said procedure for causing inefficient execution of said procedure to occur.

22. The apparatus of claim 21 wherein said means for providing a model for predicting the effect of each condition, further includes the measn for providing an adjustable weight associated with each of said models so that the effect of each model can be increased, decreased or eliminated.

23. The method of claim 22 wherein said means for providing an adjustable weight further includes the step of using different weights associated with each model to obtain the most efficient sequence for executing said procedures.

24. The apparatus of claim 23 wherein said means for using different weights further includes the means for limiting the number of different weights which can be used with the associated models.

25. The apparatus of claim 21 further including the means for associating a score with each prediction of each of said models and means for summing all of said scores for said models associated with said procedure for determining said penalty for said procedure.

26. The apparatus of claim 21 wherein said means for providing a model for predicting the effect of each condition associated with said procedure further includes the means for modeling the probability that said output of one of said procedures will not be quickly usable by a different one of said procedures.

27. The apparatus of claim 21 wherein said means for providing a model for predicting the effect of each condition associated with said procedures further include the means for modeling the number of registers required by the procedure associated with said block which are currently unavailable.

28. The apparatus of claim 21 wherein said means for providing a model for predicting the effect of each condition associated with said procedure further includes the means for modeling the rate at which said procedure uses data which are input into said block associated with said procedure.

29. The apparatus of claim 21 wherein said means for providing a model for predicting the effect of each condition associated with said procedure further includes the means for modeling the rate at which said procedure generates data at said outputs of said block associated with said procedure.

30. The apparatus of claim 29 wherein said means for providing a model for predicting the effect of each condition associated with said procedure further includes the means for modeling the duration of time necessary to process said generated data by a different one of said procedures.

31. The apparatus of claim 21 wherein said means for providing a model for predicting the effect of each condition associated with said procedure further includes the means for modeling the amount of available data that will never be used by the procedure associated with said block.

32. The apparatus of claim 21 wherein said means for providing a model for predicting the effect of each condition associated with said procedure further includes the means for modeling whether said procedure associated with said block drives other blocks of said diagram which readily use available data.

33. The apparatus of claim 21 wherein said means for providing a model for predicting the effect of each condition associated with said procedure further includes the means for modeling the possibility that said procedure associated with said block will overwrite input data provided to said block with output data from said block.

34. The apparatus of claim 21 wherein said means for providing a model for predicting the effect of each condition associated with said procedure further includes the means for modeling the state of the machine for executing said procedure so that the state of the machine shall dictate when said procedure is executed.

35. The apparatus of claims 26 or 27 or 28 or 29 or 30 or 31 or 32 or 33 or 34 wherein said procedures are executed on a target processor and said procedures include assembly language instructions and said apparatus further includes the means for resequencing said assembly language instructions to take advantage of any parallel execution capabilities of the processor used for executing said instructions.

36. The apparatus of claims 26 or 27 or 28 or 29 or 30 or 31 or 32 or 33 or 35 wherein said procedures are executed on a target processor and said procedures include assembly language instructions and said apparatus further includes the means for combining two or more of said instructions into one instruction in order to take advantage of parallel execution capabilities of the target processor used for executing said isntructions.

37. The apparatus of claim 35 or 36 wherein said target processor includes a register memory having a first and a second register bank and said apparatus further includes the means for alternating between said first and second register banks when storing data to said memory of said target processor.

38. The apparatus of claims 34 or 35 or 36 wherein said target processor further includes a circular buffer and said apparatus further includes the means for providing a date based list of said registers of said target processor in said circular list and each list item contains a flag which indicates whether or not the corresponding register is currently usable, the order of said circular list reflecting the order of the last use of each register.

# FIG. 1

BLOCK DIAGRAM

Block A ┈┈┈┈▶ Block B

GENERATED CODE

```
1    ; Code for Block A
2    ADD XO, A          ;  A to the output that drives Block B
3    MOVE A, X:123      ;  save Output
4    ; Code for Block B
5    MOVE X:123,A       ;  Get out input from previous block
6    ASL A
7    MOVE A,X:126       ;  Save output
```

# FIG. 2

BLOCK DIAGRAM

Block A ┈┈┈┈┈┈┈┈▶

Block B ┈┈┈┈┈┈┈┈▶ Block C

Block D ┈┈┈┈┈┈┈┈▶ Block E

GENERATED SCHEDULE

Block D
Block A
Block B
Block C
Block E

FIG. 3

BLOCK DIAGRAM → INITIAL OPTIMIZATION → SCHEDULING OF BLOCKS → EFFICIENT SOURCE CODE → RESEQUENCING AND COMBINING INSTRUCTIONS → ALLOCATION OF AND MEMORY

# FIG. 4

```
∂PARAMETER_DECLARATIONS  (

     )

     ∂INPUT_DECLARATIONS  (
          SCALAR    I_In1     (
                         REGCLASS                         (ANYDÁTAREG)
                         REGMODE                          (U,R,U,U)
            )
          SCALAR  I_In2        (
                         REGCLASS                         (ACC)
                         REGMODE                          (U,RW,U,U)
                         ALIAS                            (O_out)
             )
       )
     ∂OUTPUT_DECLARATIONS  (
          SCALAR  O_out        (
                         REGCLASS                         (acc)
                         REGMODE                          (U,RW,U,U,)
                         ALIAS                            (I_In2)
             )
       )
     ∂STATE_DECLARATIONS     (
       )
     ∂TEMP_DECLARATIONS        (
       )

     ∂BLOCK_DECLARATIONS      ( )

     ∂COMMUTE_LISTS  (
                (I_In1,I_In2)
      )

     /*
      *         Code Region
      */

     ∂VALIDATION_CODE  ( )

     ∂INIT_CODE  ( )

     ∂RUNOUT_CODE  (
            ADD              I_In1,O_out

      )

     ∂ term_code  ( )
```

FIG. 5

FIG. 6

| FIG. 5 MULT, ADD BLOCKS | FIG. 6 MAC BLOCKS |
|---|---|
| 494,744 | 496 |
| 464,536 | 464 |
| 480,648 and 608,648 | 480 and 608 |

## FIG. 7

## FIG. 8

## FIG. 9
### FLOWCHART FOR SCHEDULER

19

# FIG. 10

## FLOWCHART FOR SELECT-NEXT-BLOCK

SELECT-NEXT-BLOCK — 90

GENERATE-CANDIDATE-LIST [RETURNS "CANDIDATE-LIST"] — 92

INITIALIZE "CANDIDATE-BLOCK" TO THE FIRST BLOCK ON "CANDIDATE-LIST" — 94

INITIALIZE "MINIMUM-FOM" TO A LARGE NUMBER — 96

CALCULATE-FOM "CANDIDATE-BLOCK" RETURNS "FOM" — 98

IS "FOM" < "MINIMUM FOM" ? — 100

SET "MINIMUM-FOM" TO "FOM" — 102    YES

SET "MINIMUM-BLOCK" TO "CANDIDATE-BLOCK" — 104

NO

IS "CANDIDATE-BLOCK" AT THE END OF "CANDIDATE-LIST" ? — 106

SET "CANDIDATE-BLOCK" TO THE NEXT BLOCK ON "CANDIDATE-LIST" — 108    NO

YES

RETURN "MINIMUM-BLOCK" — 110

# FIG. 11

```
┌─────────┐
│ BLOCK A │ ─ ─ ─ ─ ─ ─ ─ ─ ─ ─ ─ ─ ─ ─ ─→  ┌─────────┐
└─────────┘                                    │         │
                                               │ BLOCK C │
┌─────────┐                                    │         │
│ BLOCK B │ ─ ─ ─ ─ ─ ─ ─ ─ ─ ─ ─ ─ ─ ─ ─→  └─────────┘
└─────────┘           │
                      │ ─ ─ ─ ─ ─ ─ ─ ─ ─→  ┌─────────┐
                                             │         │
┌─────────┐                                  │         │
│ BLOCK D │ ─ ─ ─ ─ ─ ─ ─ ─ ─ ─ ─ ─ ─ ─ ─→ │ BLOCK F │
└─────────┘                                  │         │
                                             │         │
┌─────────┐                                  │         │
│ BLOCK E │ ─ ─ ─ ─ ─ ─ ─ ─ ─ ─ ─ ─ ─ ─ ─→ └─────────┘
└─────────┘
```

# FIG. 12

```
┌─────────┐
│ BLOCK A │ ─ ─ ─ ─ ─ ─ ─ ─ ─ ─ ─ ─ ─ ─ ─→  ┌─────────┐
└─────────┘                                    │         │
                                               │ BLOCK C │
┌─────────┐                                    │         │
│ BLOCK B │ ─ ─ ─ ─ ─ ─ ─ ─ ─ ─ ─ ─ ─ ─ ─→  └─────────┘
└─────────┘           │
                      │ ─ ─ ─ ─ ─ ─ ─→  ┌─────────┐
                      │                  │ BLOCK I │
                      │                  └─────────┘
                      │ ─ ─ ─ ─ ─ ─ ─→  ┌─────────┐
                                         │ BLOCK F │
                                         └─────────┘
┌─────────┐
│ BLOCK G │ ─ ─ ─ ─ ─ ─ ─ ─ ─ ─ ─ ─ ─ ─ ─→  ┌─────────┐
└─────────┘                                    │ BLOCK N │
                                               └─────────┘
```

FIG.13

FIG.14

BLOCK A - - - - - - - -X- - - - - - - → BLOCK C

BLOCK B - - - - - - - -Y- - - - - - - →

BLOCK B - - - - - - - -Z- - - - - - - → BLOCK E

FIG.15

BLOCK A - - - - - - - - - - - - - - - → BLOCK B

- - - - - - - - - - → BLOCK C

FIG.16

BLOCK A - - - - - - - - - - - - - - - → BLOCK B

- - - - - - - - - → BLOCK C

- - - - - - - - - → BLOCK D

FIG.17

# FIG.18 <u>INITIAL CODE STREAM</u>

1)  SHIFT Y1
2)  MOVE XMEM_1, X0
3)  MOVE YMEM_1, Y0
4)  SHIFT X0

<u>INSTRUCTION RESEQUENCING</u>

| CURRENT LINE | IS ORPHAN? | EARLIER LINE | CANDIDATE? | STACKS LINE#S | RECOMBINED LINE |
|---|---|---|---|---|---|
| SHIFT Y1 | NO | -- | -- | (EMPTY) | -- |
| MOVE XMEM_1,X0<br>-- | YES<br>-- | SHIFT Y1<br>**ENDOFSTREAM** | YES<br>NO | (1)<br>(1) | --<br>SHIFT Y1 XMEM_1,X0 |
| MOVE YMEM_1,Y0<br>-- | YES<br>-- | SHIFT Y1 XMEN_1, X0<br>**ENDOFSTREAM** | YES<br>NO | (1)<br>SHIFT Y1,XMEM_1,X0 | --<br>SHIFT Y1 XMEM_1,X0<br>YMEM_1,Y0 |
| SHIFT X0 | NO | -- | -- | (EMPTY) | -- |

<u>RESULTING CODE STREAM</u>

1)  SHIFT Y1 XMEM_1,X0 YMEM_1,Y0
2)  SHIFT X0

EP 0 513 433 A2

SYMBOLIC CODE STREAM

```
1)    SHIFT REG
2)    MOVE FROM MEM, TO REG
3)    MOVE FROM MEM, TO REG
```

CODE STREAM RESULTING FROM
NON-ALTERNATING ALLOCATION

```
1)    SHIFT A
2)    MOVE XMEM,XO
3)    MOVE XMEM,X1
```

CODE STREAM AFTER RESEQUENCING

```
1)    SHIFT A       XMEM,XO
2)    MOVE XMEM,XI
      ------------
```

FIG. 19

FIG. 20 CODE STREAM RESULTING FROM
ALTERNATING ALLOCATION

```
1)    SHIFT A
2)    MOVE XMEM,XO
3)    MOVE YMEM,YO
```

CODE STREAM AFTER RESEQUENING

```
SHIFT A           XMEM,XO   YMEM,YO
```

EP 0 513 433 A2

## SAMPLE SEQUENCE OF ALLOCATION AND FREE CALLS

1) ALLOCATE REGISTER ( );
2) FREE REGISTER (NAME OF REGISTER ALLOCATED IN 1);
3) ALLOCATE REGISTER ( );
4) FREE REGISTER (NAME OF REGISTER ALLOCATED IN 3);
5) ALLOCATE REGISTER ( );

## MAINTENANCE OF DATE-BASED REGISTER LIST

| LINE | ACTION | ALLOCATED REGISTER | REG. TO FREE | REGISTER LIST AFTER CALL |
|---|---|---|---|---|
| NA | NA | NA | NA | (XO=FREE, X1=FREE) |
| 1 | ALLOCATE | XO | NA | (XO=USED, X1=FREE) |
| 2 | FREE | NA | XO | (X1=FREE, X1=FREE) |
| 3 | ALLOCATE | X1 | NA | (X1=USED, X1=FREE) |
| 4 | FREE | NA | X1 | (XO=FREE, X1=FREE) |
| 5 | ALLOCATE | XO | NA | (XO=USED, X1=FREE) |

## FIG. 21

SYMBOLIC CODE STREAM

1)    MOVE XMEMORY_1,OPL

2)    SHIFT OPL

3_    MOVE XMEMORY_2,OP2]

LINEAR-BASED ALLOCATION

| LINE | ACTION | OPERAND/REGISTER | RE. LIST AFTER CALL | GENERATED CODE |
|---|---|---|---|---|
| 1 | ALLOCATE | OPL = XO | (XO=USED,X1=FREE) | -- |
|  | GEN | -- | -- | MOVE XMEMORY_1,XO |
|  | GEN | -- | -- | SHIFT XO |
| 2 | FREE | XO | (XO=FREE,X1=FREE) | -- |
| 3 | ALLOCATE | OP2 = XO | (XO=USED,X1=FREE) |  |
|  | GEN | -- | -- | MOVE XMEMORY_2,XO |

RESULTING CODE STREAM

1)    MOVE XMEMORY_1,XO

2)    SHIFT XO

3)    MOVE XMEMORY_2,XO

EP 0 513 433 A2

## F I G. 23  DATE-BASED ALLOCATION

| LINE | ACTION | OPERAND/REGISTER | REG. LIST AFTER CALL | GENERATED CODE |
|------|--------|------------------|----------------------|----------------|
| 1 | ALLOCATE | OPI = XO | (XO=USED,X1=FREE) | -- |
|  | GEN | -- | -- | MOVE XMEMORY_1,XO |
|  | GEN | -- | -- | SHIFT XO |
| 2 | FREE | XO | (X1=FREE,X1=FREE) | -- |
| 3 | ALLOCATE | OP2 = X1 | (X1=USED,X1=FREE) |  |
|  | GEN | -- | -- | MOVE XMEMORY_2,X1 |

RESULTING CODE STREAM

1)    MOVE XMEMORY_1,XO
2)    SHIFT XO
3)    MOVE XMEMORY_2,X1


NOTE HOWEVER THAT THIS CODE STREAM MAY BE REDUCED BY COMBINING LINES 2 AND 3, RESULTING IN CODE THAT IS 2 CYCLES, OR 33% FASTER THAN THE CODE GENERATED WITH LINEAR-BASED ALLOCATION:

1)    MOVE XMEMORY_1,XO
2)    SHIFT XO XMEMORY_2,X1

EP 0 513 433 A2